**Europäisches Patentamt**

**European Patent Office**

**Office européen des brevets**

(19)

(11) **EP 1 157 254 B1**

(12) **FASCICULE DE BREVET EUROPEEN**

(45) Date de publication et mention
de la délivrance du brevet:
**16.03.2005 Bulletin 2005/11**

(21) Numéro de dépôt: **00902695.6**

(22) Date de dépôt: **31.01.2000**

(51) Int Cl.⁷: $G01C\ 21/16$

(86) Numéro de dépôt international:
**PCT/FR2000/000219**

(87) Numéro de publication internationale:
**WO 2000/046573 (10.08.2000 Gazette 2000/32)**

(54) **APPAREIL A GYROMETRES ET ACCELEROMETRES POUR LA DETERMINATION DES ATTITUDES D'UN AERODYNE**

VORRICHTUNG MIT KREISELN UND BESCHLEUNIGUNGSAUFNEHMERN ZUM BESTIMMEN DER LAGEN EINES FLUGZEUGS

APPARATUS WITH GYROSCOPES AND ACCELEROMETERS FOR DETERMINING THE ATTITUDES OF AN AERODYNE

(84) Etats contractants désignés:
**DE FR GB**

(30) Priorité: **02.02.1999 FR 9901181**

(43) Date de publication de la demande:
**28.11.2001 Bulletin 2001/48**

(73) Titulaire: **THALES AVIONICS S.A.**
**78140 Vélizy Villacoublay (FR)**

(72) Inventeurs:
• **MARTIN, Nicolas, Thomson-CSF P.I.D.**
  **94117 Arcueil Cédex (FR)**
• **CHEVALIER, Jean-René, Thomson-CSF P.I.D.**
  **94117 Arcueil Cédex (FR)**

(74) Mandataire: **Guérin, Michel et al**
**THALES Intellectual Property,**
**31-33 avenue Aristide Briand**
**94117 Arcueil Cédex (FR)**

(56) Documents cités:
**US-A- 4 070 674** **US-A- 5 479 161**

## Description

L'invention est relative à un appareil de détermination des attitudes d'un engin volant.

Pour piloter un aérodyne, il est nécessaire de connaître ses attitudes.

Les attitudes sont par définition les trois angles d'Euler ψ, θ, φ, ou, respectivement, cap, assiette, et inclinaison, qui définissent l'orientation du repère lié à l'aérodyne par rapport au repère géographique local. Le repère (ou trièdre) géographique local est un trièdre orthonormé dont un axe est suivant la verticale locale (vers le bas) et les deux autres axes suivant les directions nord et est locales. Le repère lié à l'aérodyne est un trièdre orthonormé dont l'axe X, ou axe de roulis, est colinéaire au fuselage de l'aérodyne, l'axe Y, ou axe de tangage, est perpendiculaire à son plan de symétrie, et l'axe Z, ou axe de lacet, est inclus dans le plan de symétrie.

Les attitudes sont déterminées à l'aide d'un dispositif gyrométrique dit à composants liés, constitué d'au moins trois gyromètres solidaires entre eux et solidaires de la structure de l'aéronef. Chacun de ceux-ci fournit une composante, suivant son axe, du vecteur $\vec{\Omega}$ de rotation instantanée de l'aérodyne par rapport à un référentiel inertiel. Ce dispositif permet de mesurer les trois composantes de $\vec{\Omega}$ dans le repère X, Y, Z lié à l'aérodyne. Ces composantes sont, respectivement, le roulis p suivant l'axe X, le tangage q suivant l'axe Y et le lacet r suivant l'axe Z.

Ces trois composantes sont intégrées, par exemple par la méthode dite des quaternions. L'intégration fournit des quaternions d'attitudes, d'où l'on déduit, avec l'orientation initiale de l'aérodyne, une matrice d'attitudes puis les angles d'Euler.

Les signaux de mesure délivrés par les gyromètres présentent des défauts appelés dérives. Comme ces signaux sont intégrés, les erreurs sur les attitudes augmentent avec le temps. C'est pourquoi, habituellement, pour déterminer les attitudes, on fait appel, en plus des gyromètres, à des accéléromètres qui sont utilisés pour corriger les résultats fournis par l'intégration des signaux des gyromètres. Cette correction s'effectue dans une boucle d'asservissement.

Les accéléromètres solidaires du dispositif gyrométrique à composants liés peuvent fournir, grâce à la pesanteur, les attitudes en assiette et inclinaison de l'aérodyne ; toutefois les signaux qu'ils délivrent sont entachés d'erreurs qui rendent les résultats difficilement exploitables tels quels. Par contre, la combinaison, dans une boucle d'asservissement, des signaux fournis par des gyromètres et des accéléromètres permet de compenser les dérives des gyromètres tout en conservant l'avantage de ces derniers qui est de fournir des résultats avec un bruit relativement faible à court terme.

Dans des appareils connus, la comparaison entre les signaux gyrométriques et accélérométriques constitue une opération complexe car les signaux des accéléromètres sont intégrés de façon à représenter des vitesses et ces dernières sont comparées à des références ; cette comparaison sert à élaborer la correction du dispositif gyrométrique. L'intégration fait appel aux attitudes issues du dispositif gyrométrique.

Le document US-A-4 070 674 divulgue un appareil conforme au préambule de la présente revendication 1.

L'invention fournit un appareil dans lequel les corrections sont effectuées de façon simple et fiable. Dans l'appareil selon l'invention, la comparaison est effectuée entre, d'une part, un vecteur de direction verticale fourni par le dispositif gyrométrique et, d'autre part, un vecteur de direction verticale fourni par les accéléromètres. De préférence, la comparaison consiste à effectuer le produit vectoriel de ces deux vecteurs.

Le vecteur de direction verticale fourni par les accéléromètres est colinéaire à l'accélération de la pesanteur, durant les phases de vol rectiligne non accéléré. Ainsi, il n'est pas nécessaire d'effectuer une intégration des signaux accélérométriques. Par ailleurs, dans le dispositif gyrométrique, le vecteur de direction verticale constitue la dernière colonne de la matrice d'attitudes obtenue avec ce dispositif. En outre, les deux vecteurs de direction verticale peuvent être exprimés dans un même repère lié à l'aérodyne.

On rappelle ici que la matrice d'attitudes est une matrice 3x3 dans laquelle la première colonne représente la direction du nord dans le repère XYZ de l'aérodyne, et les seconde et troisième colonnes représentent respectivement les directions est et verticale, également en repère XYZ.

Il est d'ailleurs à noter que le produit vectoriel est isotrope, c'est-à-dire indépendant du repère.

Quand on fait appel à un produit vectoriel, les corrections à apporter sont aussi d'une grande simplicité car le module du produit vectoriel est proportionnel au sinus de l'angle de la rotation qui fait coïncider le vecteur de direction verticale fourni par le dispositif gyrométrique avec le vecteur de direction verticale fourni par le dispositif accélérométrique. De plus, la direction du produit vectoriel donne l'axe de cette rotation.

Si la comparaison consiste à effectuer un produit vectoriel, des dispositions supplémentaires peuvent être nécessaires. En effet, un produit vectoriel étant, par définition, perpendiculaire à chacun des vecteurs du produit, sa composante est nulle suivant la direction verticale, et si l'on veut estimer la composante verticale de la dérive du dispositif gyrométrique, il est nécessaire de disposer de données supplémentaires.

Dans un mode de réalisation de l'invention, pour obtenir une estimation de la composante verticale de la dérive du dispositif gyrométrique, on effectue une projection orthogonale du vecteur $\vec{\Omega}$ de composantes p, q r, qui est fourni par les gyromètres, après compensation des dérives (par l'asservissement mentionné ci-dessus), sur la direction verticale fournie par le dispositif gyrométrique.

Pour obtenir cette projection, il suffit d'effectuer le produit scalaire du vecteur $\vec{\Omega}$ par le vecteur unitaire $\vec{U}_g$ de la direction verticale fournie par le dispositif gyrométrique. Ce vecteur projeté peut être utilisé, dans un asservissement à retour intégral, pour compenser la composante verticale de la dérive du vecteur $\vec{\Omega}$ fourni par le dispositif gyrométrique.

Le produit scalaire $\vec{\Omega}.\vec{U}_g$ représente la dérive du gyromètre en direction verticale seulement si l'avion est en phase de vol rectiligne, c'est-à-dire qu'il ne tourne pas autour de la direction verticale. Ainsi, dans un mode de réalisation, on détecte les phases de virage et on ouvre la boucle d'asservissement de lacet (permettant de compenser la composante verticale des dérives du dispositif) pendant les phases de virage.

De même, le dispositif accélérométrique ne fournit un vecteur représentant l'accélération de la pesanteur que pendant les phases de vol rectiligne non accéléré. Il est donc préférable d'ouvrir au moins certaines boucles d'asservissement du dispositif gyrométrique pendant les phases de virage et/ou d'accélération. On ouvre la boucle d'asservissement de roulis dans les phases de virage et on ouvre la boucle d'asservissement de tangage pendant les phases d'accélération. Lors des virages accélérés, on ouvre de préférence la boucle de roulis, la boucle de tangage restant fermée.

Dans une variante, pour obtenir une estimation de la composante verticale de la dérive du dispositif gyrométrique, au lieu d'utiliser un asservissement en lacet, on fait appel à un asservissement en cap, c'est-à-dire qu'on asservit la direction du nord exprimée en repère aérodyne, fourni par le dispositif gyrométrique, sur le nord magnétique fourni par un capteur externe tel qu'un magnétomètre.

De préférence, l'écart de cap est représenté par un vecteur dont la direction correspond à la verticale du dispositif gyrométrique de façon qu'il n'entre pas en conflit avec le produit vectoriel mentionné ci-dessus qui, par définition, est perpendiculaire à la direction verticale fournie par le dispositif gyrométrique. A cet effet, on peut utiliser le produit vectoriel d'un vecteur $\vec{U}_m$ représentant la direction du nord magnétique (fourni par un magnétomètre) par un vecteur $\vec{b}_1$ représentant la direction du nord fourni par le dispositif gyrométrique dans la première colonne de la matrice d'attitudes. Ce produit vectoriel est alors projeté sur la direction verticale $\vec{b}_3$ fournie par le dispositif gyrométrique.

L'invention prévoit ainsi un appareil de détermination d'attitudes, notamment l'assiette et l'inclinaison d'un aérodyne selon la revendication 1. Les caractéristiques de modes de réalisation particuliers figurent dans les revendications dépendantes 2 à 19.

D'autres caractéristiques et avantages de l'invention apparaîtront avec la description de certains de ses modes de réalisation, celle-ci étant effectuée en se référant aux dessins ci-annexés sur lesquels :

la figure 1 est un schéma d'un boîtier, avec ses axes, d'un appareil selon l'invention,
la figure 2 est un schéma de boucle d'asservissement d'un appareil conforme à l'invention,
la figure 3 est un schéma analogue à celui de la figure 2, mais pour une variante,
les figures 4, 5 et 6 sont des diagrammes illustrant des modes de fonctionnement, conformes à l'invention, des circuits d'asservissement représentés sur la figure 2 ou la figure 3,
la figure 7 est un schéma d'un mode de réalisation d'intégrateur utilisé dans le mode de réalisation représenté sur la figure 2 ou la figure 3,
la figure 8 est un diagramme donnant, à titre d'exemple, un mode de fonctionnement de l'intégrateur représenté sur la figure 7, et
la figure 9 correspond à une variante de la figure 3.

L'exemple de réalisation de l'invention que l'on va décrire en relation avec les figures se rapporte à un instrument ou appareil pour déterminer les attitudes d'un avion qui comprend au moins trois gyromètres (non représentés) dont les composants ont une position fixe par rapport à l'avion. Le dispositif gyrométrique est, dans ces conditions, dit à "composants liés". Autrement dit, les gyromètres sont des capteurs dont les axes ont des positions bien définies par rapport aux axes de l'avion.

L'appareil comprend aussi des accéléromètres (non montrés) pour corriger les erreurs ou dérives des gyromètres. On sait, en effet, que les gyromètres fournissent des données (les attitudes d'un avion) à faibles bruits mais présentant des dérives, ou biais, entraînant des erreurs croissant avec le temps.

Pour compenser les dérives, on fait appel à des accéléromètres qui donnent les composantes de l'accélération de l'aérodyne correspondant à la résultante des forces de contact s'appliquant à cet aérodyne. Par "forces de contact", on entend la poussée et les forces aérodynamiques (traînée et portance). A partir de ces composantes fournies par les accéléromètres, on peut en déduire l'accélération de la pesanteur, c'est-à-dire la direction verticale. En effet :

L'équation générale de la dynamique s'écrit :

$$\frac{\vec{F}_d}{m} + \frac{\vec{F}_c}{m} = \vec{\gamma}_c \tag{1}$$

Dans cette formule $\vec{F}_d$ est la somme des forces dites "à distance" qui s'appliquent à l'aérodyne, c'est-à-dire la pesanteur et l'inertie, $\vec{F}_c$ est la somme des forces de contact mentionnées ci-dessus, $\vec{\gamma}_c$ est l'accélération cinématique de l'aérodyne et m la masse de ce dernier. Les forces d'inertie sont les forces de Coriolis qui sont ici négligeables.

Dans le cas d'un vol rectiligne à vitesse uniforme, $\vec{\gamma}_c$ = 0. Les accéléromètres fournissent alors les composantes de l'accélération $\vec{g}$ de la pesanteur. Les composantes de $\vec{g}$ sont déterminées par rapport aux axes des capteurs que constituent les accéléromètres. Comme ces capteurs sont fixés au bâti de l'avion, il est aisé de déterminer les composantes de $\vec{g}$ dans le repère de l'avion. Les accéléromètres fournissent donc une indication sur l'orientation de l'avion.

Par ailleurs, on peut observer que les accéléromètres ne fournissent une composante du vecteur $\vec{g}$ que lors de phases de vol rectiligne uniforme de l'avion. Dans les autres phases, on peut connaître la direction verticale, à condition de disposer d'autres données, comme on le verra plus loin.

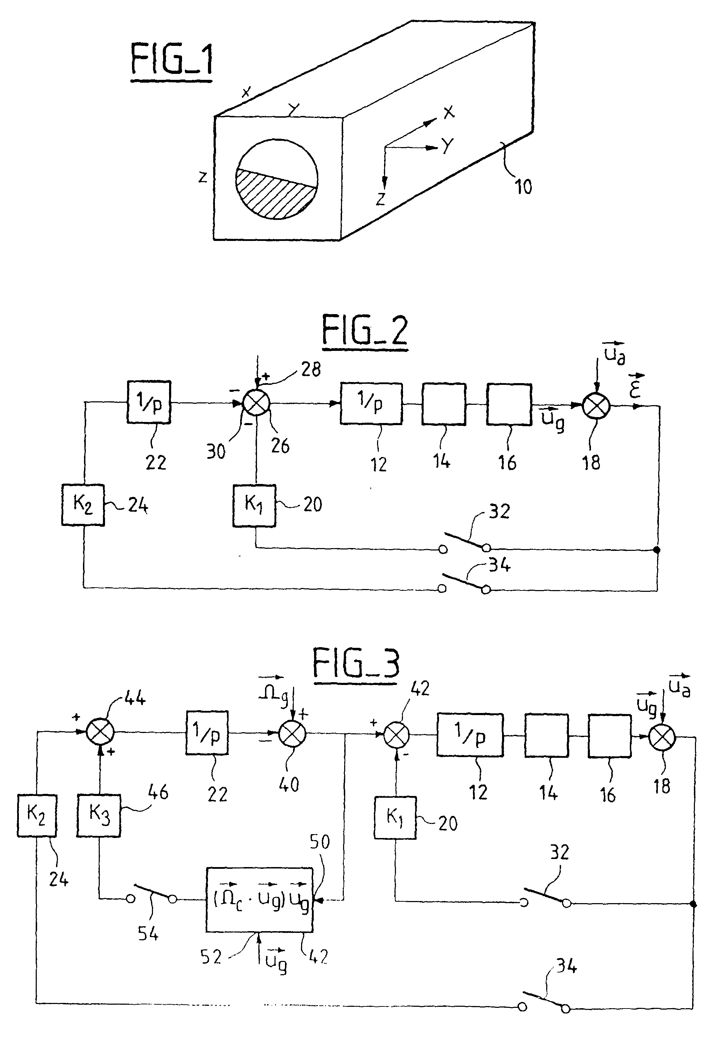

Dans l'exemple, on prévoit trois gyromètres disposés suivant un trièdre trirectangle colinéaire aux axes du boîtier 10 de l'appareil (figure 1). On prévoit donc un gyromètre selon l'axe x, un selon l'axe y et un selon l'axe z.

Par contre, on prévoit seulement deux accéléromètres, l'un selon l'axe x et l'autre selon l'axe y. En effet, pour déterminer la direction du vecteur $\vec{g}$ d'accélération de la pesanteur, deux composantes du vecteur $\vec{\gamma} = \vec{g}$ suffisent, car la norme g du vecteur $\vec{g}$ étant connue, on peut en déduire la composante $\gamma_z$ selon l'axe Z à partir de cette norme et des composantes $\gamma_x$ et $\gamma_y$ grâce à la formule suivante :

$$\gamma_z = \sqrt{g^2 - \gamma_x^2 - \gamma_y^2} \qquad (2)$$

Dans les appareils connus, pour corriger les données gyrométriques par les données fournies par les accéléromètres, on prévoit une boucle d'asservissement dans laquelle le vecteur $\vec{\Omega}$ fourni par les gyromètres est intégré pour fournir les attitudes. On intègre les accélérations en utilisant les attitudes gyrométriques pour effectuer des projections de changement de repère et on compare les vitesses ainsi obtenues à une référence pour en déduire les corrections qui sont utilisées pour corriger, en boucle fermée, les données gyrométriques.

Contrairement aux traitements effectués par les appareils classiques dans lesquels on intègre les données fournies par les accéléromètres, l'invention consiste à comparer directement le vecteur de direction verticale fourni par les accéléromètres au vecteur de direction verticale fourni par la matrice d'attitudes que délivre le dispositif gyrométrique.

Dans le mode de réalisation préféré de l'invention, cette comparaison est obtenue en élaborant le produit vectoriel $\vec{\varepsilon}$ des deux vecteurs unitaires $\vec{U}_a$ (direction verticale fournie par les accéléromètres) et $\vec{U}_g$ (direction verticale fournie par le dispositif gyrométrique) de direction verticale, c'est-à-dire :

$$\vec{\varepsilon} = \vec{U}_a \wedge \vec{U}_g \qquad (3)$$

L'appareil selon l'invention est donc particulièrement simple car, d'une part, il n'est pas nécessaire d'intégrer les données fournies par les accéléromètres et, d'autre part, les vecteurs $\vec{U}_a$ et $\vec{U}_g$ sont dans le même repère qui est celui des capteurs, c'est-à-dire du boîtier 10.

En outre, le vecteur $\vec{\varepsilon}$ est exploitable pour effectuer la correction puisque sa norme est $\sin\alpha$, $\alpha$ étant l'angle entre les vecteurs $\vec{U}_g$ et $\vec{U}_a$. La correction consiste à faire tourner le vecteur $\vec{U}_g$ d'un angle $\alpha$ de façon à le ramener dans la direction du vecteur $\vec{U}_a$. On utilise ce vecteur $\vec{\varepsilon}$ dans une boucle d'asservissement qui fait converger le vecteur $\vec{U}_g$ vers le vecteur $\vec{U}_a$. Cette convergence s'effectue avec une vitesse de rotation égale à la norme du vecteur $\vec{\varepsilon}$ et donc proportionnelle (si l'angle $\alpha$ est petit) à l'écart angulaire entre les vecteurs $\vec{U}_g$ et $\vec{U}_a$.

De plus, la correction est isotrope, c'est-à-dire indépendante du repère dans lequel on se trouve. Toutefois, on effectuera les calculs d'asservissement dans le repère capteur.

Le vecteur $\vec{U}_g$ est fourni par la dernière colonne de la matrice d'attitudes du dispositif gyrométrique.

On va maintenant décrire en relation avec la figure 2 un circuit d'asservissement d'un appareil conforme à l'invention.

Ce circuit d'asservissement comporte : un moyen de calcul d'intégration, ou intégrateur 12, fournissant un quaternion d'attitudes, un moyen 14 pour extraire la matrice B d'attitudes des quaternions, et un bloc 16 qui extrait de la matrice B la dernière colonne qui représente le vecteur $\vec{U}_g$, c'est-à-dire le vecteur unitaire de direction verticale dans le repère XYZ du boîtier 10.

Le vecteur $\vec{U}_g$ fourni par le bloc 16 est appliqué sur la première entrée d'un bloc 18 de produit vectoriel dont la seconde entrée reçoit le vecteur vertical unitaire $\vec{U}_a$ fourni par le dispositif accélérométrique. Ainsi, le bloc 18 délivre sur sa sortie le vecteur $\vec{\varepsilon}$.

Pour faire converger le vecteur $\vec{U}_g$ vers le vecteur $\vec{U}_a$, on prévoit une première boucle d'asservissement proportionnel comportant un amplificateur (ou atténuateur) 20 de coefficient $k_1$.

Cet asservissement proportionnel est complété par un asservissement à intégrateur 22 permettant d'estimer et de compenser les dérives du dispositif gyrométrique. On prévoit donc une seconde boucle avec un second amplificateur (ou atténuateur) 24 de coefficient $k_2$.

Le signal de la première boucle est fourni sur une première entrée - (moins) d'un soustracteur 26 dont la sortie est reliée à l'entrée de l'intégrateur 12 et qui comporte une entrée + (plus) 28 recevant le vecteur $\vec{\Omega}_g$ fourni par les trois gyromètres et une seconde entrée - 30 connectée à la sortie de l'intégrateur 22 en série avec l'amplificateur 24.

Dans chacune des boucles d'asservissement, en série avec les amplificateurs 20 et 24, on prévoit des interrupteurs, respectivement 32 et 34, qui sont ouverts pendant les phases dynamiques de vol. En effet, pendant ces phases, les accéléromètres ne fournissent plus les composantes de l'accélération de la pesanteur. Cependant, pendant ces ouvertures des boucles d'asservissement, on continue à compenser les dérives des gyromètres grâce à la sortie de l'intégrateur 22.

Il est à noter que le schéma représenté sur la figure 2 est une représentation vectorielle. Chaque ligne fléchée représente une information vectorielle de dimension 3. Il y a donc, en pratique, trois boucles d'asservissement, une pour chaque composante. Le repère le plus approprié est le repère (X, Y, Z) lié à l'aérodyne.

Pour détecter les phases dynamiques pendant lesquelles les boucles d'asservissement doivent être ouvertes, on compare les composantes du vecteur $\vec{\varepsilon}$ à des seuils. Si les seuils sont dépassés, on ouvre la ou les boucles. Comme on le verra plus loin, une boucle d'asservissement dans une direction peut être ouverte, alors que d'autres boucles d'asservissement restent fermées. Quoiqu'il en soit, il est nécessaire de sélectionner soigneusement les instants des ouvertures afin de ne pas fausser l'asservissement.

Il faut également éviter que le vecteur $\vec{U}_g$ dérive de façon excessive pendant les ouvertures de boucles. On décrira plus loin des moyens permettant d'effectuer les ouvertures des boucles d'asservissement à des instants correctement choisis, ainsi que des sécurités permettant d'éviter les divergences du vecteur $\vec{U}_g$ pendant les ouvertures des boucles.

On va maintenant décrire, en relation avec la figure 3, un circuit d'asservissement qui utilise des boucles d'asservissement analogues à celles représentées sur la figure 2 et, en plus, une autre boucle d'asservissement permettant de compenser la composante verticale de dérive $d\vec{\Omega}_g$.

En effet, le produit vectoriel $\vec{\varepsilon}$ étant, par définition, perpendiculaire au vecteur $\vec{U}_g$, sa composante suivant la direction verticale est nulle. Ce produit vectoriel ne permet donc pas d'estimer la composante verticale de la dérive $d\vec{\Omega}_g$ si l'avion conserve une attitude constante.

Cette compensation est nécessaire pour pouvoir obtenir correctement les trois composantes de la rotation instantanée $\vec{\Omega}$. En outre, selon un aspect de l'invention, la composante verticale de la rotation instantanée constituant le taux de virage, cette composante sert à distinguer les phases rectilignes des phases de virages pour ouvrir, à des moments correctement choisis, certaines des boucles d'asservissement.

Dans le mode de réalisation représenté sur la figure 3, on effectue une projection orthogonale du vecteur $\vec{\Omega}_c$, c'est-à-dire le vecteur de rotation instantanée compensé des dérives estimées, sur la direction $\vec{U}_g$. A cet effet, on effectue le produit scalaire $\vec{\Omega}_c.\vec{U}_g$, et on utilise le vecteur $(\vec{\Omega}_c.\vec{U}_g).\vec{U}_g$ pour effectuer l'asservissement de lacet.

Pour éviter toute confusion, on a noté $\vec{\Omega}_g$ le vecteur d'accélération angulaire sans compensation et $\vec{\Omega}_c$ le même vecteur avec compensation.

Sur la figure 3, les éléments correspondant à ceux de la figure 2 portent les mêmes chiffres de références.

Dans cette réalisation, le vecteur $\vec{\Omega}_g$ est appliqué à l'entrée + d'un soustracteur 40 dont la sortie est reliée à l'entrée + d'un autre soustracteur 42 dont l'entrée - reçoit la sortie de l'amplificateur 20 ($k_1$). Par ailleurs, l'entrée - du soustracteur 40 est reliée à la sortie d'un additionneur 44 par l'intermédiaire de l'intégrateur 22.

Une première entrée de l'additionneur 44 est reliée à la sortie de l'amplificateur 24 ($k_2$), tandis que la seconde entrée de cet additionneur est reliée à la sortie d'un amplificateur 46 de gain $k_3$ se trouvant dans la boucle d'asservissement de lacet.

Cette boucle d'asservissement de lacet comporte un bloc 48 qui calcule les composantes du vecteur $(\vec{\Omega}_c.\vec{U}_g).\vec{U}_g$. A cet effet, ce bloc 48 présente une entrée 50 recevant le vecteur $\vec{\Omega}_c$ ($\vec{\Omega}_g$ compensé des dérives, du fait de la boucle d'asservissement à amplificateur 24 et intégrateur 22), et une seconde entrée 52 recevant le vecteur $\vec{U}_g$ fourni par la sortie du bloc 16. La sortie du bloc 48 est reliée à l'entrée de l'amplificateur 46 par l'intermédiaire d'un interrupteur 54.

Étant donné que la boucle d'asservissement à amplificateur 46 doit compenser une dérive, elle comporte un intégrateur, et ce dernier est l'intégrateur 22, qui fait également partie de la boucle à amplificateur 24.

Le produit scalaire $\vec{\Omega}_c.\vec{U}_g$ représente la composante verticale de la dérive du dispositif gyrométrique à la condition que l'avion ne tourne pas autour de la verticale. C'est pourquoi l'interrupteur 54 est ouvert pendant les virages.

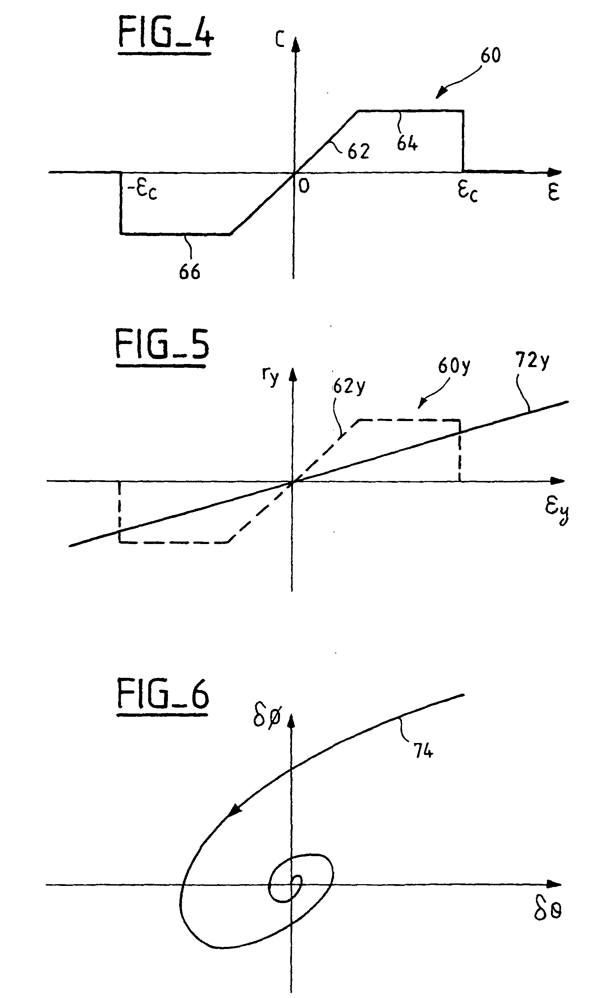

On va maintenant décrire, notamment en relation avec les figures 4 à 6, un certain nombre de dispositions permettant de commander correctement l'ouverture des interrupteurs 32, 34 et 54 des circuits d'asservissement pendant certaines phases transitoires pour lesquelles ces circuits (ou une partie d'entre eux) ne peuvent pas fonctionner correctement.

On considérera tout d'abord l'interrupteur 32 (figures 2 et 3) du circuit d'asservissement de type proportionnel.

Cet interrupteur 32 doit être ouvert pendant les accélérations ou les virages, car, dans ce cas, le vecteur $\vec{U}_a$ fourni par les accéléromètres ne représente pas la direction verticale réelle. Pour détecter ces phases, on détecte les écarts angulaires entre les vecteurs $\vec{U}_g$ et $\vec{U}_a$ qui est représenté par les composantes du vecteur $\vec{\varepsilon} = \vec{U}_a \wedge \vec{U}_g$.

Pour limiter les ouvertures de l'interrupteur 32, on confère une caractéristique de saturation à l'amplificateur 20. Cette caractéristique est représentée sur la figure 4, qui est un diagramme montrant, pour une composante (x par exemple), la variation de la correction c portée en ordonnées, de l'amplificateur 20 en fonction de la composante $\varepsilon_x$ du vecteur $\vec{\varepsilon}$, cette composante $\varepsilon_x$ étant portée en abscisses. Cette variation est représentée par une ligne 60 présentant : une zone linéaire de pente $K_1$ représentée par un segment de droite 62 passant par l'origine O, des zones de saturation représentées par les segments de droites 64 et 66 parallèles à l'axe des abscisses, et des zones de coupure au-delà des abscisses $\varepsilon_{xc}$ et $-\varepsilon_{xc}$. Lorsque l'écart $\varepsilon_x$ dépasse, en valeur absolue, la valeur $\varepsilon_{xc}$, l'interrupteur 32 est ouvert.

La saturation limite le signal appliqué sur l'entrée - du soustracteur 42. Cette limite du signal correspond au maximum admissible pour la compensation des dérives. Une telle caractéristique est un compromis entre une correction proportionnelle et la boucle ouverte. Cette caractéristique de saturation atténue l'effet des erreurs de $\vec{\varepsilon}$ sur la précision de $\vec{U}_g$, sans avoir à couper l'asservissement.

Pour commander l'ouverture de l'interrupteur 34, on compare les normes de $\vec{\varepsilon}$ et de $\vec{\Omega}_c$ à des seuils pour détecter les évolutions de l'aérodyne, lorsqu'on passe en phase de virage ou d'accélération.

L'interrupteur 54 est ouvert lorsque le taux de virage dépasse un seuil. Ce taux de virage est représenté par le produit scalaire $\vec{\Omega}_c.\vec{U}_g$.

On va maintenant décrire, en relation avec les diagrammes des figures 5 et 6, une disposition qui permet de limiter le risque de divergence pendant les ouvertures de l'interrupteur $32_x$ lors des phases de virage.

Cette disposition consiste à maintenir fermé l'interrupteur $32_y$ à partir du moment où l'interrupteur $32_x$ est ouvert, quel que soit $\varepsilon_y$, en remplaçant, dans ce cas, le profil de l'amplificateur $20_y$ tel que décrit avec la figure 4 par celui décrit avec la figure 5, c'est-à-dire avec une pente plus faible et continue, sans seuil.

Autrement dit, le gain $k_{1y}$ de l'amplificateur $20_y$ présente une valeur plus faible pendant les phases de virages. Dans le diagramme de la figure 5, on a porté en abscisses la composante $\varepsilon_y$ du vecteur $\vec{\varepsilon}$, et, en ordonnées, le signal $r_y$ en sortie de l'amplificateur $20_y$. La ligne $60_y$ représentée en traits interrompus correspond à la ligne 60 de la figure 4. Cette variation de $r_y$ en fonction de $\varepsilon_y$ intervient pendant les phases de vol rectiligne sans accélération, l'interrupteur $32_x$ de la boucle d'asservissement roulis étant fermée dans ce cas. Par contre, pendant les phases de virage, l'interrupteur $32_x$ est ouvert et l'interrupteur $32_y$ reste fermé. Mais, comme représenté par la ligne $72_y$, la caractéristique de l'amplificateur $20_y$ est modifiée dans cette situation : la pente de la droite $72_y$ est inférieure à la pente de la droite $62_y$.

Avec cette disposition, lorsque l'avion tourne autour de la verticale, les erreurs d'attitude en tangage et en roulis convergent vers zéro suivant une spirale comme représentée par la figure 6, si la vitesse de l'aérodyne reste constante.

Ainsi, en régime permanent, on obtient des erreurs nulles en tangage et roulis.

Sur le diagramme de la figure 6, on a porté en ordonnées l'erreur $\delta\phi$ (roulis) et, en abscisses, l'erreur $\delta\theta$ (tangage). La courbe en spirale 74 converge vers des erreurs nulles en $\phi$ (roulis) et en $\theta$ (tangage).

Dans le cas d'un virage, s'il se produit des accélérations ou décélérations longitudinales (axe x), la référence de verticale $\vec{U}_a$ fournie par les accéléromètres devient fausse aussi en tangage. Cette erreur $\Delta\theta$ en tangage sur le vecteur de direction verticale $\vec{U}_a$ se traduit par une erreur sur le roulis $\phi$. En régime permanent, cette erreur est proportionnelle à $\Delta\theta$, $K_1$ et $1/\Omega$, $\Omega$ étant le taux de virage et par une erreur nulle pour $\theta$. La réduction du gain de l'amplificateur rend ainsi le dispositif moins sensible aux erreurs de correction dues aux accélérations longitudinales.

On va maintenant décrire une autre disposition qui permet de fiabiliser la distinction entre les phases rectilignes et les phases de virage de façon à maintenir fermé l'interrupteur $32_x$ lorsqu'on détecte une phase de vol rectiligne.

On a vu que le maintien à l'état ouvert ou fermé des interrupteurs 32 dépend de la comparaison de chaque composante de $\vec{\varepsilon}$ à un seuil. On a vu aussi qu'on pouvait, pour distinguer entre les phases de vol rectiligne et les phases de virages, utiliser aussi le produit scalaire $\vec{\Omega}_c.\vec{U}_g$ qui représente le taux de virage. Selon l'invention, on interdit l'ouverture de $32_x$ lorsque $\varepsilon_x$ dépasse son seuil de coupure si le taux de virage calculé indique que l'on n'est pas en virage. Dans ce cas, on remplace le profil de l'amplificateur $20_y$ tel que représenté sur la figure 4 par un profil linéaire comme la droite 72 sur la figure 5. Toutefois, la pente de cette droite est supérieure à la pente de la droite 62. De cette manière, on ramène la direction verticale du dispositif gyrométrique dans la direction verticale vraie $\vec{U}_a$ fournie par les accéléromètres, dans le cas où, en sortie de virage, $\varepsilon_x$ serait sorti de sa plage de capture (zone $-\varepsilon_c$ $+\varepsilon_c$ sur le diagramme de la figure 4) à la suite d'une divergence pendant la phase en boucle ouverte.

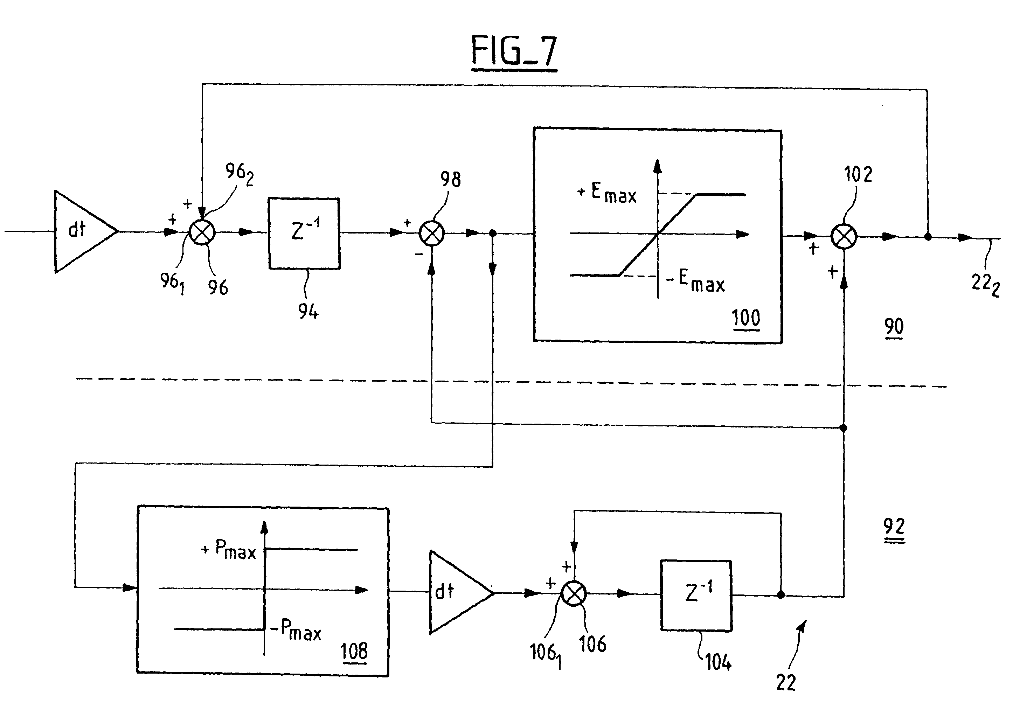

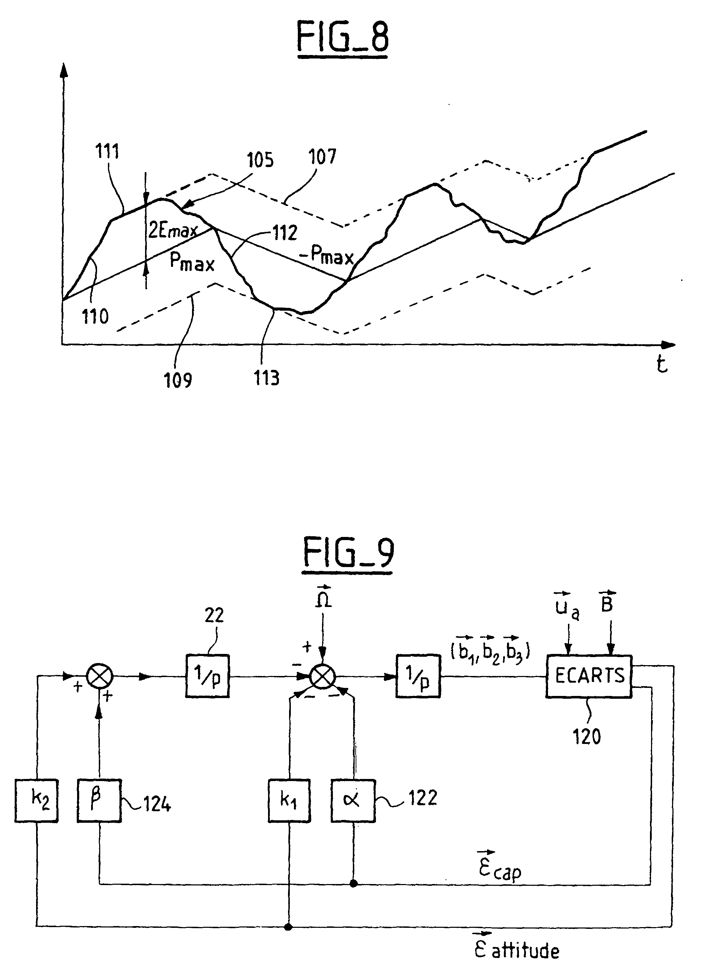

On va maintenant décrire, en relation avec les figures 7 et 8, un mode de réalisation de l'intégrateur 22 utilisé pour estimer les dérives.

On rappelle ici que l'intégrateur 22 doit pouvoir compenser les dérives en boucle ouverte, c'est-à-dire quand les asservissements sont inhibés.

L'intégrateur 22 tient compte des caractéristiques des dérives du dispositif gyrométrique. En particulier, l'évolution des dérives en fonction du temps étant limitée par une pente maximale caractéristique des gyromètres, on limite également la pente de sortie de l'intégrateur 22.

La figure 7 représente un système échantillonné, de période dt. Chaque bloc $Z^{-1}$ est un retard, ce qui signifie que la sortie est en retard d'une période par rapport à l'entrée.

Dans l'exemple représenté sur la figure 7, l'intégrateur 22 comporte deux étages, respectivement 90 et 92. Le premier étage comporte un retard 94 dont l'entrée est reliée à la sortie d'un additionneur 96 dont une entrée $96_1$ constitue l'entrée de l'intégrateur 22 et dont l'autre entrée $96_2$ est reliée à la sortie $22_2$ de l'intégrateur 22.

La sortie du retard 94 est reliée à l'entrée + d'un soustracteur 98 dont la sortie est reliée à l'entrée d'un saturateur d'écart 100 limitant les signaux entre deux valeurs +$E_{max}$ et -$E_{max}$ de signes opposés. La sortie du saturateur 100 est reliée à une entrée d'un additionneur 102 dont la sortie est reliée à la sortie $22_2$ de l'intégrateur 22.

Le second étage 92 comporte aussi un retard 104 dont la sortie est reliée à la seconde entrée de l'additionneur 102 et dont l'entrée est reliée à la sortie d'un additionneur 106 dont une entrée $106_1$ est reliée à la sortie d'un saturateur de pente 108 dont l'entrée est reliée à la sortie du soustracteur 98 en amont du saturateur d'écart 100.

La sortie du retard 104 est également connectée à l'entrée - du soustracteur 98, et à la deuxième entrée de l'additionneur 106.

Le saturateur de pente 108 permet de limiter la pente du second étage 92 à deux pentes maximales de signes opposés $P_{max}$, -$P_{max}$.

Le premier étage 90 intègre directement le signal d'entrée. Sa sortie est limitée par le saturateur 100 dans une zone de largeur fixée dont le centre est le signal de sortie du second étage 92.

Le signal de sortie du second étage évolue selon deux pentes maximales opposées $P_{max}$ et -$P_{max}$ déterminées par le saturateur 108.

Le second étage 92 sert à limiter la pente moyenne du signal intégré, tandis que la sortie de l'intégrateur 22 est fournie par le premier étage.

L'évolution du signal de sortie est représentée sur la figure 8. On voit que le signal de sortie 105 est confiné entre deux lignes brisées 107 et 109 dont tous les segments sont parallèles entre eux. Chacun des segments des lignes 107 et 109 ayant alternativement une pente $P_{max}$ et une pente -$P_{max}$. Tant que l'écart entre les signaux des deux étages 90 et 92 reste inférieur à l'écart maximum $2E_{max}$ (parties 110, 112, etc. de la courbe 105), l'estimateur a un fonctionnement linéaire, c'est-àdire qu'il fonctionne comme un simple intégrateur. On conserve ainsi les propriétés dynamiques de l'asservissement autour de la valeur zéro. Par contre, lorsque l'écart dépasse l'écart maximum déterminé par le saturateur 100, la sortie de l'estimateur est "bridée" afin que son signal n'évolue pas plus que la pente maximale autorisée $P_{max}$. Ce bridage est représenté par les segments 111, 113, etc. sur la figure 8.

En résumé, l'intégrateur 22 représenté sur la figure 7 permet de limiter la vitesse moyenne d'évolution du signal d'estimation et non de limiter la vitesse instantanée de ce signal d'estimation. Ces caractéristiques permettent de s'affranchir des difficultés qui pourraient résulter de vols avec de nombreux virages et donc avec des ouvertures fréquentes de boucles d'asservissement.

Dans tous les exemples décrits ci-dessus, on a indiqué qu'il était nécessaire de prendre des précautions lors des phases de vol non rectilignes et/ou accélérées, car la correction fournie par les accéléromètres ne peut être utilisée pendant ces phases. En effet, dans le cas de vol en virage ou accéléré, les mesures accélérométriques ne fournissent plus la verticale vraie liée à la pesanteur mais la verticale apparente liée à la portance de l'aérodyne. Cependant, dans l'équation (1) mentionnée ci-dessus, le vecteur $\vec{\gamma}_c$ d'accélération cinématique peut être déterminé à partir de la vitesse $\vec{V}$ et de la rotation instantanée $\vec{\Omega}$ selon la formule classique ci-dessous :

$$\vec{\gamma}_c = \frac{d\vec{V}}{dt} + \vec{\Omega} \wedge \vec{V} \tag{4}$$

Dans cette formule, les vecteurs $\vec{V}$ et $\vec{\Omega}$ ainsi que l'accélération $\frac{d\vec{V}}{dt}$ sont considérés en repère aérodyne.

On voit ainsi que si l'on connaît le vecteur $\vec{V}$ en repère aérodyne, on sait déterminer $\vec{\gamma}_c$, car $\vec{\Omega}$ est fourni par les gyromètres. Autrement dit, si le vecteur $\vec{V}$ peut être déterminé, les données gyrométriques peuvent être corrigées en boucle fermée, même lors de virages ou d'accélérations.

La vitesse de l'aérodyne, $\vec{V}$, peut être déterminée par un anémomètre. Ainsi, quand l'aérodyne vole sans dérapage à incidence nulle ou faible, la vitesse en repère aérodyne est un vecteur $\vec{V}$ dont la composante $V_x$ est la vitesse fournie par l'anémomètre et les composantes $V_y$ et $V_z$ sont nulles (étant donné qu'il n'y a pas de dérapage et que l'incidence est nulle).

Un anémomètre peut ainsi être utilisé soit pour maintenir constamment fermées les boucles d'asservissement, soit pour limiter les périodes d'ouverture de ces boucles.

On va maintenant décrire, notamment en relation avec la figure 9, une disposition qui peut être utilisée en combinaison avec l'utilisation de la vitesse fournie par un anémomètre pour corriger les erreurs et dérives des gyromètres.

Cette disposition part de la constatation qu'en phase de vol rectiligne, la référence de verticale est très sensible aux erreurs sur le vecteur $\vec{\Omega}$, c'est-à-dire aux erreurs d'estimation de dérives. En d'autres termes, la précision sur le vecteur de direction verticale dépend fortement des erreurs sur le vecteur $\vec{\Omega}$ ; en outre, cette précision se dégrade quand la vitesse augmente. L'estimation de la dérive de lacet, qui a été décrite avec la figure 3, n'est pas suffisamment précise pour permettre de compenser cette altération de précision.

Ainsi, selon une autre disposition de l'invention, on remplace l'asservissement de lacet par un asservissement du cap gyrométrique sur le cap magnétique fourni par un magnétomètre. Cet asservissement est analogue à celui des attitudes, mais ne nécessite pas d'ouverture de boucle d'asservissement pendant les virages. Cet asservissement en cap permet, bien entendu, de limiter les erreurs de cap et améliore l'estimation de la dérive de lacet. On améliore la précision du calcul de la verticale vraie dans l'équation (4) lorsqu'on utilise la vitesse anémométrique. On peut aussi améliorer la détection des phases rectilignes de vol. Enfin, les contraintes de qualité sur le gyromètre de lacet sont moins sévères, ce qui permet l'utilisation d'un gyromètre de lacet plus économique.

Un mode de réalisation de cette disposition de l'invention consiste à fournir un vecteur de correction de cap $\vec{\varepsilon}_c$ de direction verticale afin que cette correction n'entre pas en conflit avec celle fournie par le vecteur $\vec{\varepsilon}$ mentionné ci-dessus qui est par construction, dans le plan horizontal (produit vectoriel des directions verticales fournies par le dispositif gyrométrique et par les accéléromètres).

L'écart de cap peut être obtenu grâce à un magnétomètre ou appareil analogue qui fournit les composantes du champ magnétique terrestre $\vec{B}$. Dans ces conditions, l'écart de cap est calculé selon la formule ci-dessous :

$$\vec{\varepsilon}_c = [(\vec{U}_m \wedge \vec{b}_1).\, \vec{b}_3].\vec{b}_3 = (\vec{U}_m.\vec{b}_2).\vec{b}_3 \tag{5}$$

Dans cette formule, le vecteur $\vec{U}_m$ est le vecteur unitaire dans la direction du nord magnétique et $\vec{b}_1$, $\vec{b}_2$ et $\vec{b}_3$ sont les trois vecteurs fournis par chacune des trois colonnes de la matrice d'attitudes B avec :

$$B = \begin{bmatrix} b_{11} & b_{12} & b_{13} \\ b_{21} & b_{22} & b_{23} \\ b_{31} & b_{32} & b_{33} \end{bmatrix} = \begin{bmatrix} \vec{b}_1 \vec{b}_2 \vec{b}_3 \end{bmatrix} \tag{6}$$

Dans ce cas, le vecteur $\vec{b}_1$ est le vecteur d'attitude dans la direction nord, le vecteur $\vec{b}_2$ est le vecteur d'attitude dans la direction est et le vecteur $\vec{b}_3$ est le vecteur d'attitude en direction verticale.

L'équation (5) signifie que l'on effectue le produit vectoriel de $\vec{U}_m$ par $\vec{b}_1$ et que l'on projette le vecteur résultat sur la verticale donnée par $\vec{b}_3$.

La figure 9 représente, de façon simplifiée, les boucles d'asservissement utilisées dans ce mode de réalisation où on effectue une correction de cap. Cette figure 9 est analogue à celle de la figure 3. Toutefois, comme déjà indiqué ci-dessus, l'asservissement de lacet est remplacé par l'asservissement en cap. On voit que l'intégrateur 22 est commun aux boucles d'asservissement d'attitude et de cap. On a représenté par un bloc 120 l'organe qui détermine les vecteurs $\vec{\varepsilon}_c$ d'écart d'attitudes (obtenu à partir du produit vectoriel des vecteurs de direction verticale fournis, d'une part, par le dispositif gyrométrique et, d'autre part, par les accéléromètres) et $\vec{\varepsilon}_c$ d'écart de cap. Ce vecteur $\vec{\varepsilon}_c$ est obtenu à partir de la matrice d'attitudes et du vecteur $\vec{B}$ de champ magnétique terrestre.

On prévoit, dans l'asservissement en cap, une correction de type proportionnel avec un gain $\alpha$ (amplificateur 122) et une correction de type intégral de gain $\beta$ (amplificateur 124), cette dernière correction faisant appel au même intégrateur 22 que l'asservissement en attitude de gain $k_2$.

Quel que soit le mode de réalisation, l'appareil comporte, de façon classique, des moyens de réinitialisation habituellement dénommés "caging". Cette réinitialisation est déclenchée de façon manuelle par le pilote pour faire converger rapidement les attitudes afin que la direction verticale déterminée par le dispositif gyrométrique corresponde à la verticale réelle. Cette fonction peut être utilisée en vol à vitesse constante rectiligne, ou dans n'importe quelle phase de vol, si on combine les données fournies par un anémomètre, ou analogue, avec les données fournies par les accéléromètres.

Pour assurer cette fonction de réinitialisation, dans un mode de réalisation de l'invention, les gains des amplificateurs des boucles d'asservissement proportionnel sont majorés pendant un temps déterminé, par exemple trois minutes, sur les trois axes et, pendant cette durée, les boucles d'asservissement sont maintenues à l'état fermé et les saturations sont inhibées. Les intégrateurs étant bridés, les boucles d'asservissement permettent de faire converger rapidement les erreurs d'attitudes afin qu'elles puissent rentrer dans la plage de capture de ces asservissements.

## Revendications

1. Appareil de détermination d'attitudes, notamment l'assiette ($\theta$) et l'inclinaison ($\phi$) d'un aérodyne, comportant :

   un dispositif gyrométrique à composants liés comportant au moins trois gyromètres et fournissant les composantes du vecteur ($\vec{\Omega}$) de rotation instantanée de l'aérodyne dans un repère lié à l'aérodyne,
   des moyens pour calculer, à partir des mesures gyrométriques, une matrice d'attitudes ($\vec{b}_1, \vec{b}_2, \vec{b}_3$) définissant l'orientation de l'aérodyne par rapport au repère géographique local, incluant notamment les composantes d'un vecteur $\vec{U}_g$ de direction verticale dans un repère lié à l'aérodyne,
   des accéléromètres fournissant les composantes d'un vecteur $\vec{U}_a$ représentant la direction de la verticale dans un repère lié à l'aérodyne lorsque l'aérodyne se déplace en mouvement rectiligne non accéléré,
   des moyens pour comparer des données calculées à partir des accéléromètres à des données calculées à partir des gyromètres afin de fournir des corrections pour compenser les erreurs ou dérives du dispositif gyrométrique,

   **caractérisé en ce que** les accéléromètres sont solidaires du dispositif gyrométrique, et **en ce que** la comparaison est effectuée entre le vecteur $\vec{U}_g$ de direction verticale fourni par le dispositif gyrométrique et le vecteur $\vec{U}_a$ de direction verticale fourni par les accéléromètres, et un signal d'erreur représentant l'écart entre ces directions est établi

2. Appareil selon la revendication 1, **caractérisé en ce que** les composantes du vecteur $\vec{U}_a$ fourni par le dispositif gyrométrique sont constituées par la dernière colonne ($\vec{b}_3$) de la matrice d'attitudes.

3. Appareil selon l'une quelconque des revendications précédentes, **caractérisé en ce que** les vecteurs de direction verticale ont une longueur unitaire.

4. Appareil selon l'une quelconque des revendications précédentes, **caractérisé en ce que** les moyens de comparaison effectuent le produit vectoriel ($\vec{\varepsilon}$) des deux vecteurs de direction verticale.

5. Appareil selon l'une quelconque des revendications précédentes, **caractérisé en ce qu'**il comporte une boucle d'asservissement de type proportionnel.

6. Appareil selon la revendication 5, **caractérisé en ce que** la boucle d'asservissement de type proportionnel présente un gain limité à une valeur maximale prédéterminée (64, 66).

7. Appareil selon l'une quelconque des revendications précédentes, **caractérisé en ce qu'**il comprend une boucle d'asservissement à intégrateur (22) pour compenser les dérives.

8. Appareil selon la revendication 4, **caractérisé en ce qu'**il comporte un moyen pour effectuer une correction suivant la direction verticale.

9. Appareil selon la revendication 8, **caractérisé en ce que** le moyen pour effectuer une correction suivant la direction verticale comprend un moyen de calcul de la projection, sur la direction verticale, du vecteur ($\Omega$) de rotation instantanée fourni par le dispositif gyrométrique, la direction verticale sur laquelle est effectuée la projection étant fournie par le dispositif gyrométrique, et le vecteur de rotation instantanée qui est projeté étant corrigé par la boucle d'asservissement.

10. Appareil selon l'une quelconque des revendications précédentes, **caractérisé en ce que** le vecteur de direction verticale est fourni, d'une part, par les accéléromètres et, d'autre part, à partir de la vitesse de l'aérodyne délivrée, par exemple, par des moyens anémométriques.

**11.** Appareil selon la revendication 10, **caractérisé en ce que** la direction verticale est déterminée à partir de l'équation suivante :

$$\frac{\vec{F}_d}{m} = \frac{d\vec{V}}{dt} + \vec{\Omega} \wedge \vec{V} - \frac{\vec{F}_c}{m}$$ $\vec{F}_d$ étant la force de la pesanteur, de direction verticale, $\vec{V}$ le vecteur de vitesse de l'aérodyne déterminé par les moyens anémométriques, $\vec{\Omega}$ le vecteur de rotation instantanée de l'aérodyne déterminé par le dispositif gyrométrique, et $\vec{F}_c$ la résultante des forces de contact déterminée par les accéléromètres, et m la masse de l'aérodyne.

**12.** Appareil selon l'une quelconque des revendications précédentes, **caractérisé en ce qu'**il comporte un moyen d'asservissement du cap gyrométrique sur le cap magnétique.

**13.** Appareil salon les revendications 4 et 12, **caractérisé en ce que** l'asservissement du cap est déterminé à partir du vecteur de correction ($\vec{\varepsilon}_c$) satisfaisant à l'équation suivante :

$$\vec{\varepsilon}_c = [(\vec{U}_m \wedge \vec{b}_1)\,\vec{b}_3]\vec{b}_3 = (\vec{U}_m.\vec{b}_2).\vec{b}_3 \tag{5}$$

équation dans laquelle $\vec{U}_m$ est un vecteur représentant la direction du nord magnétique, de préférence d'amplitude unité, et les vecteurs $\vec{b}_1$, $\vec{b}_2$ et $\vec{b}_3$ sont trois vecteurs dont les coordonnées sont fournies par les colonnes de la matrice d'attitudes délivrée par le dispositif gyrométrique.

**14.** Appareil selon l'une quelconque des revendications précédentes, **caractérisé en ce qu'**il comprend des boucles fermées d'asservissement des attitudes utilisant les signaux de correction fournis par les moyens de comparaison, et des moyens pour ouvrir au moins une boucle en dehors des phases de vol rectiligne et à vitesse constante de l'aérodyne.

**15.** Appareil selon la revendication 14, **caractérisé en ce que** l'ouverture des boucles d'asservissement intervient quand l'écart entre le vecteur de direction verticale fourni par le dispositif gyrométrique et le vecteur de direction verticale fourni par les accéléromètres dépasse une valeur prédéterminée ($\varepsilon_{xc}$).

**16.** Appareil selon la revendication 14 ou 15, **caractérisé en ce qu'**une boucle d'asservissement en roulis étant ouverte pendant un virage, une boucle d'asservissement correspondante en tangage reste fermée pendant ce virage.

**17.** Appareil selon l'une quelconque des revendications 14 à 16, **caractérisé en ce que**, le taux de virage étant utilisé pour distinguer entre des phases de vol rectiligne et des phases de vol différentes, une boucle d'asservissement en roulis est fermée quand le taux de virage est inférieur en valeur absolue à un seuil déterminé.

**18.** Appareil selon les revendications 7 et 8, **caractérisé en ce qu'**il comporte une boucle d'asservissement pour assurer une correction des mesures gyrométriques suivant la direction verticale et **en ce que** cette boucle d'asservissement comprend un intégrateur (22) commun à la boucle compensant les dérives.

**19.** Appareil selon la revendication 18, **caractérisé en ce que** l'intégrateur (22) comporte des moyens (108) permettant de limiter la pente moyenne de son signal de sortie et des moyens (100) pour que, à chaque instant, le signal de sortie présente un écart inférieur à un seuil par rapport à un signal à variation linéaire ayant une pente déterminée.

**Patentansprüche**

**1.** Gerät zur Bestimmung von Fluglagen, insbesondere der Trimmlage (θ) und der Neigung (Φ) eines Luftfahrzeugs, das aufweist:

eine gyrometrische Vorrichtung mit verbundenen Komponenten, die mindestens drei Gyrometer aufweist und die Komponenten des augenblicklichen Drehvektors ($\vec{\Omega}$) des Luftfahrzeugs in einem mit dem Luftfahrzeug verbundenen Bezugssystem liefert,

Mittel, um ausgehend von gyrometrischen Messungen eine Fluglagenmatrix $(\vec{b}_1, \vec{b}_2, \vec{b}_3)$ zu berechnen, die die Orientierung des Luftfahrzeugs bezüglich des lokalen geographischen Bezugssystems definiert, einschließlich insbesondere der Komponenten eines senkrechten Richtungsvektors $\vec{U}_g$ in einem mit dem Luftfahrzeug verbundenen Bezugssystem,

Beschleunigungsmesser, die die Komponenten eines Vektors $\vec{U}_a$ liefern, der die Richtung der Senkrechten in einem mit dem Luftfahrzeug verbundenen Bezugssystem darstellt, wenn das Luftfahrzeug sich in einer nicht beschleunigten, geradlinigen Bewegung fortbewegt,

Mittel, um ausgehend von den Beschleunigungsmessern berechnete Daten mit Daten zu vergleichen, die ausgehend von den Gyrometern berechnet werden, um Korrekturen zur Kompensation der Fehler oder Drifte der gyrometrischen Vorrichtung zu liefern,

**dadurch gekennzeichnet, dass** die Beschleunigungsmesser fest mit der gyrometrischen Vorrichtung verbunden sind, und dass der Vergleich zwischen dem von der gyrometrischen Vorrichtung gelieferten senkrechten Richtungsvektor $\vec{U}_g$ und dem von den Beschleunigungsmessern gelieferten senkrechten Richtungsvektor $\vec{U}_a$ durchgeführt und ein den Unterschied zwischen diesen Richtungen darstellendes Fehlersignal erstellt wird.

2. Gerät nach Anspruch 1, **dadurch gekennzeichnet, dass** die Komponenten des von der gyrometrischen Vorrichtung gelieferten Vektors $\vec{U}_a$ aus der letzten Spalte $(\vec{b}_3)$ der Fluglagenmatrix bestehen.

3. Gerät nach einem der vorhergehenden Ansprüche, **dadurch gekennzeichnet, dass** die senkrechten Richtungsvektoren eine Einheitslänge haben.

4. Gerät nach einem der vorhergehenden Ansprüche, **dadurch gekennzeichnet, dass** die Vergleichsmittel das Vektorprodukt $(\vec{\varepsilon})$ der beiden senkrechten Richtungsvektoren herstellen.

5. Gerät nach einem der vorhergehenden Ansprüche, **dadurch gekennzeichnet, dass** es eine Regelschleife vom proportionalen Typ aufweist.

6. Gerät nach Anspruch 5, **dadurch gekennzeichnet, dass** die Regelschleife vom proportionalen Typ eine Verstärkung aufweist, die auf einen vorbestimmten maximalen Wert (64, 66) begrenzt ist.

7. Gerät nach einem der vorhergehenden Ansprüche, **dadurch gekennzeichnet, dass** es eine Regelschleife mit Integrator (22) aufweist, um die Drifte zu kompensieren.

8. Gerät nach Anspruch 4, **dadurch gekennzeichnet, dass** es ein Mittel aufweist, um eine Korrektur gemäß der senkrechten Richtung durchzuführen.

9. Gerät nach Anspruch 8, **dadurch gekennzeichnet, dass** das Mittel zur Durchführung einer Korrektur gemäß der senkrechten Richtung ein Mittel zur Berechnung der Projektion des von der gyrometrischen Vorrichtung gelieferten augenblicklichen Drehvektors $(\vec{\Omega})$ auf die senkrechte Richtung aufweist, wobei die senkrechte Richtung, auf die die Projektion durchgeführt wird, von der gyrometrischen Vorrichtung geliefert wird, und der augenblickliche Drehvektor, der projiziert wird, von der Regelschleife korrigiert wird.

10. Gerät nach einem der vorhergehenden Ansprüche, **dadurch gekennzeichnet, dass** der senkrechte Richtungsvektor einerseits von den Beschleunigungsmessern und andererseits ausgehend von der Geschwindigkeit des Luftfahrzeugs geliefert wird, die zum Beispiel von Windmessungsmitteln geliefert wird.

11. Gerät nach Anspruch 10, **dadurch gekennzeichnet, dass** die senkrechte Richtung ausgehend von der folgenden Gleichung bestimmt wird:

$$\frac{\vec{F}_d}{m} = \frac{d\vec{V}}{dt} + \vec{\Omega} \wedge \vec{V} - \frac{\vec{F}_c}{m}$$

wobei $\vec{F}_d$ die Schwerkraft in senkrechter Richtung, $\vec{V}$ der von den Windmessungsmitteln bestimmte Geschwindigkeitsvektor des Luftfahrzeugs, $\vec{\Omega}$ der durch die gyrometrische Vorrichtung bestimmte augenblickliche Drehvektor des Luftfahrzeugs, $\vec{F}_c$ die von den Beschleunigungsmessern bestimmte Resultierende der Kontaktkräfte, und m die Masse des Luftfahrzeugs ist.

**12.** Gerät nach einem der vorhergehenden Ansprüche, **dadurch gekennzeichnet, dass** es ein Mittel zur Regelung des gyrometrischen Kurses auf den magnetischen Kurs aufweist.

**13.** Gerät nach den Ansprüchen 4 und 12, **dadurch gekennzeichnet, dass** die Regelung des Kurses ausgehend vom Korrekturvektor ($\vec{\varepsilon}_c$) bestimmt wird, der die folgende Gleichung erfüllt:

$$\vec{\varepsilon}_c = [(\vec{U}_m \wedge \vec{b}_1)\vec{b}_3]\vec{b}_3 = (\vec{U}_m \cdot \vec{b}_2)\vec{b}_3 \tag{5}$$

Gleichung, in der $\vec{U}_m$ ein Vektor ist, der die Richtung des magnetischen Nordens darstellt, vorzugsweise mit einer Einheitsamplitude, und die Vektoren $\vec{b}_1$, $\vec{b}_2$ und $\vec{b}_3$ drei Vektoren sind, deren Koordinaten von den Spalten der Fluglagenmatrix geliefert werden, die von der gyrometrischen Vorrichtung geliefert wird.

**14.** Gerät nach einem der vorhergehenden Ansprüche, **dadurch gekennzeichnet, dass** es geschlossene Regelschleifen der Fluglagen, die die von den Vergleichsmitteln gelieferten Korrektursignale verwenden, und Mittel aufweist, um mindestens eine Schleife außerhalb der Phasen des geradlinigen Flugs mit konstanter Geschwindigkeit des Luftfahrzeugs zu öffnen.

**15.** Gerät nach Anspruch 14, **dadurch gekennzeichnet, dass** das Öffnen der Regelschleifen erfolgt, wenn der Unterschied zwischen dem von der gyrometrischen Vorrichtung gelieferten senkrechten Richtungsvektor und dem von den Beschleunigungsmessern gelieferten senkrechten Richtungsvektor einen vorbestimmten Wert ($\varepsilon_{xc}$) überschreitet.

**16.** Gerät nach Anspruch 14 oder 15, **dadurch gekennzeichnet, dass** wenn eine Roll-Regelschleife während einer Kurve offen ist, eine entsprechende Nick-Regelschleife während dieser Kurve geschlossen bleibt.

**17.** Gerät nach einem der Ansprüche 14 bis 16, **dadurch gekennzeichnet, dass**, wenn der Kurvengrad verwendet wird, um zwischen den Phasen des geradlinigen Flugs und anderen Flugphasen zu unterscheiden, eine Roll-Regelschleife geschlossen ist, wenn der Kurvengrad im Absolutwert unter einem bestimmten Schwellwert liegt.

**18.** Gerät nach den Ansprüchen 7 und 8, **dadurch gekennzeichnet, dass** es eine Regelschleife aufweist, um eine Korrektur der gyrometrischen Messungen in senkrechter Richtung zu gewährleisten, und dass diese Regelschleife gemeinsam mit der die Drifte kompensierenden Schleife einen Integrator (22) aufweist.

**19.** Gerät nach Anspruch 18, **dadurch gekennzeichnet, dass** der Integrator (22) Mittel (108), die es ermöglichen, die mittlere Steigung seines Ausgangssignals zu begrenzen, und Mittel (100) aufweist, damit zu jedem Zeitpunkt das Ausgangssignal einen unter einer Schwelle liegenden Unterschied im Vergleich mit einem Signal mit linearer Veränderung mit bestimmter Neigung aufweist.

**Claims**

**1.** Apparatus for determining postures, in particular the attitude ($\theta$) and the inclination ($\phi$) of an aerodyne, comprising:

a strap-down gyrometric device comprising at least three gyrometers and providing the components of the vector ($\vec{\Omega}$) of instantaneous rotation of the aerodyne in a reference frame tied to the aerodyne,
means for calculating, from gyrometric measurements, a matrix of postures ($\vec{b}_1$, $\vec{b}_2$, $\vec{b}_3$) defining the orientation of the aerodyne with respect to the local geographical reference frame, including in particular the components of a vertically directed vector $\vec{U}_g$ in a reference frame tied to the aerodyne,
accelerometers providing the components of a vector $\vec{U}_a$ representing the direction of the vertical in a reference frame tied to the aerodyne when the aerodyne is moving with unaccelerated rectilinear motion,
means for comparing data calculated from the accelerometers with data calculated from the gyrometers so as to provide corrections for compensating for the errors or drifts of the gyrometric device,

**characterized in that** the accelerometers are integral with the said gyrometric device, and **in that** the comparison is performed between the vertically directed vector $\vec{U}_g$ provided by the gyrometric device and the vertically directed vector $\vec{U}_a$ provided by the accelerometers, and an error signal representing the discrepancy between these directions is established.

2.  Apparatus according to Claim 1, **characterized in that** the components of the vector $\vec{U}_a$ provided by the gyrometric device consist of the last column ($\vec{b}_3$) of the posture matrix.

3.  Apparatus according to either one of the preceding claims, **characterized in that** the vertically directed vectors have unit length.

4.  Apparatus according to any one of the preceding claims, **characterized in that** the means of comparison perform the vector product ($\vec{\varepsilon}$) of the two vertically directed vectors.

5.  Apparatus according to any one of the preceding claims, **characterized in that** it comprises a slaving loop of proportional type.

6.  Apparatus according to Claim 5, **characterized in that** the slaving loop of proportional type exhibits a gain limited to a predetermined maximum value (64, 66).

7.  Apparatus according to any one of the preceding claims, **characterized in that** it comprises a slaving loop with integrator (22) for compensating for drifts.

8.  Apparatus according to Claim 4, **characterized in that** it comprises a means for performing a correction along the vertical direction.

9.  Apparatus according to Claim 8, **characterized in that** the means for performing a correction along the vertical direction comprises a means for calculating the projection, onto the vertical direction, of the instantaneous rotation vector ($\vec{\Omega}$) provided by the gyrometric device, the vertical direction onto which the projection is performed being provided by the gyrometric device, and the instantaneous rotation vector which is projected being corrected by the slaving loop.

10. Apparatus according to any one of the preceding claims, **characterized in that** the vertically directed vector is provided, on the one hand, by the accelerometers and, on the other hand, from the velocity of the aerodyne as delivered, for example, by anemometric means.

11. Apparatus according to Claim 10, **characterized in that** the vertical direction is determined from the following equation:

$$\frac{\vec{F}_d}{m} = \frac{d\vec{V}}{dt} + \vec{\Omega} \wedge \vec{V} - \frac{\vec{F}_c}{m}$$

$\vec{F}_d$ being the force of gravity, directed vertically, $\vec{V}$ the velocity vector of the aerodyne determined by the anemometric means, $\vec{\Omega}$ the vector of instantaneous rotation of the aerodyne determined by the gyrometric device, and $\vec{F}_c$ the resultant of the contact forces as determined by the accelerometers, and m the mass of the aerodyne.

12. Apparatus according to any one of the preceding claims, **characterized in that** it comprises a means for slaving the gyrometric heading to the magnetic heading.

13. Apparatus according to Claims 4 and 12, **characterized in that** the slaving of the heading is determined from the correction vector ($\vec{\varepsilon}_c$) satisfying the following equation:

$$\vec{\varepsilon}_c = [(\vec{U}_m \wedge \vec{b}_1) \cdot \vec{b}_3] \cdot \vec{b}_3 = (\vec{U}_m \cdot \vec{b}_2) \cdot \vec{b}_3 \tag{5}$$

in which equation $\vec{U}_m$ is a vector representing the direction of magnetic north, preferably of unit amplitude, and

the vectors $\vec{b}_1$, $\vec{b}_2$ and $\vec{b}_3$ are three vectors whose coordinates are provided by the columns of the posture matrix delivered by the gyrometric device.

14. Apparatus according to any one of the preceding claims, **characterized in that** it comprises closed loops for slaving the postures using the correction signals provided by the comparison means, and means for opening at least one loop outside of the rectilinear-flight and constant-velocity phases of the aerodyne.

15. Apparatus according to Claim 14, **characterized in that** the opening of the slaving loops occurs when the discrepancy between the vertically directed vector provided by the gyrometric device and the vertically directed vector provided by the accelerometers exceeds a predetermined value ($\varepsilon_{xc}$).

16. Apparatus according to Claim 14 or 15,
   **characterized in that** a roll slaving loop being open during a turn, a corresponding pitch slaving loop remains closed during this turn.

17. Apparatus according to any one of Claims 14 to 18, **characterized in that**, the rate of turn being used to distinguish between rectilinear flight phases and different flight phases, a roll slaving loop is closed when the rate of turn is less in absolute value than a specified threshold.

18. Apparatus according to Claims 7 and 8,
   **characterized in that** it comprises a slaving loop for correcting the gyrometric measurements along the vertical direction and **in that** this slaving loop comprises an integrator (22) common to the loop compensating for the drifts.

19. Apparatus according to Claim 18, **characterized in that** the integrator (22) comprises means (108) making it possible to limit the mean slope of its output signal and means (100) such that, at each instant, the output signal exhibits a discrepancy smaller than a threshold with respect to a linear-variation signal having a specified slope.

FIG_1

FIG_2

FIG_3

FIG_4

FIG_5

FIG_6

FIG_7

EP 1 157 254 B1

## FIG_8

## FIG_9